Europäisches Patentamt

(19) European Patent Office          (11) Numéro de publication: **0 214 005**
                                                          **B1**
Office européen des brevets

(12)                    FASCICULE DE BREVET EUROPEEN

(45) Date de publication du fascicule du brevet:        (51) Int. Cl.⁵: **G11B 23/037**
   **23.05.90**

(21) Numéro de dépôt: **86401663.9**

(22) Date de dépôt: **24.07.86**

(54) **Bobine en matière plastique pour bande magnétique, prisonnière d'un boîtier de cassette.**

(30) Priorité: **14.08.85 FR 8512422**

(43) Date de publication de la demande:
   **11.03.87 Bulletin 87/11**

(45) Mention de la délivrance du brevet:
   **23.05.90 Bulletin 90/21**

(84) Etats contractants désignés:
   **BE DE GB IT NL**

(56) Documents cités:
   **DE-A- 3 108 585**
   **FR-A- 2 445 583**
   **GB-A- 2 010 218**
   **GB-A- 2 018 224**
   **GB-A- 2 028 272**

(73) Titulaire: **GEFITEC S.A., Avenue de la Gare, 5 Case postale 452, CH-1001 Lausanne 1(CH)**

(72) Inventeur: **Posso, Patrick, Compagne de Pierraz-Portay, CH-1009 Pully(CH)**

(74) Mandataire: **Caunet, Jean et al, Cabinet BEAU DE LOMENIE 55, rue d'Amsterdam, F-75008 Paris(FR)**

ACTORUM AG

## Description

La présente invention concerne des perfectionnements apportés à une bobine en matière plastique pour ruban magnétique, isolément prisonnière d'un boîtier de cassette.

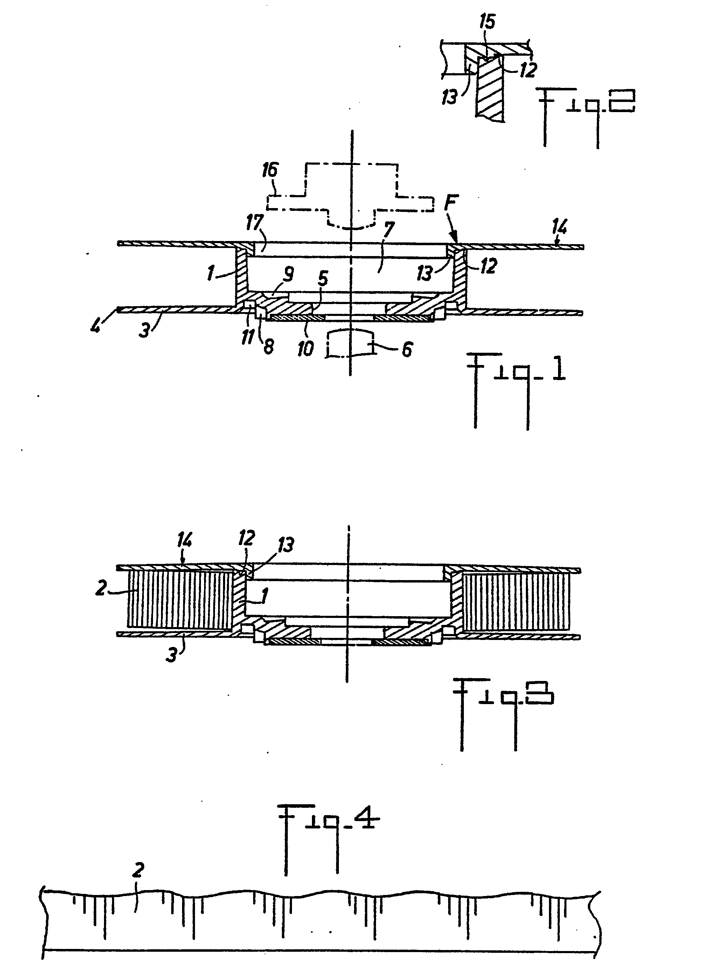

Comme le montrent clairement les figures 1 à 4, une telle bobine connue comprend un moyeu cylindrique creux 1 de grand diamètre prévu pour l'enroulement d'une bande magnétique 2. Ce moyeu est venu de moulage avec un flasque 3, le tout étant constitué par une matière plastique armée, de préférence par un polycarbonate armé de fibres de verre. Le flasque 3 s'étend de son bord périphérique 4 définissant la capacité de remplissage jusqu'à un trou central 5 destiné au passage d'un poussoir 6 susceptible de pénétrer dans la cavité interne 7 du moyeu.

Ce flasque 3 présente, à l'extérieur, une couronne dentée 8 d'entraînement en rotation et, à l'intérieur, une piste dentée d'immobilisation 9 située sensiblement en regard de la couronne. Le flasque 3 est en outre muni d'une rondelle ou insert métallique 10 surmoulé. Normalement, la bobine est centrée par une gorge annulaire 11 de son flasque 3 sur une collerette du boîtier qui la contient; elle est donc montée folle relativement à celui-ci et se trouvent alors apparents à l'extérieur ladite couronne dentée 8 pour son entraînement en rotation et ledit insert métallique pour sa coopération avec la tête d'entraînement laquelle comporte le poussoir 6 précité.

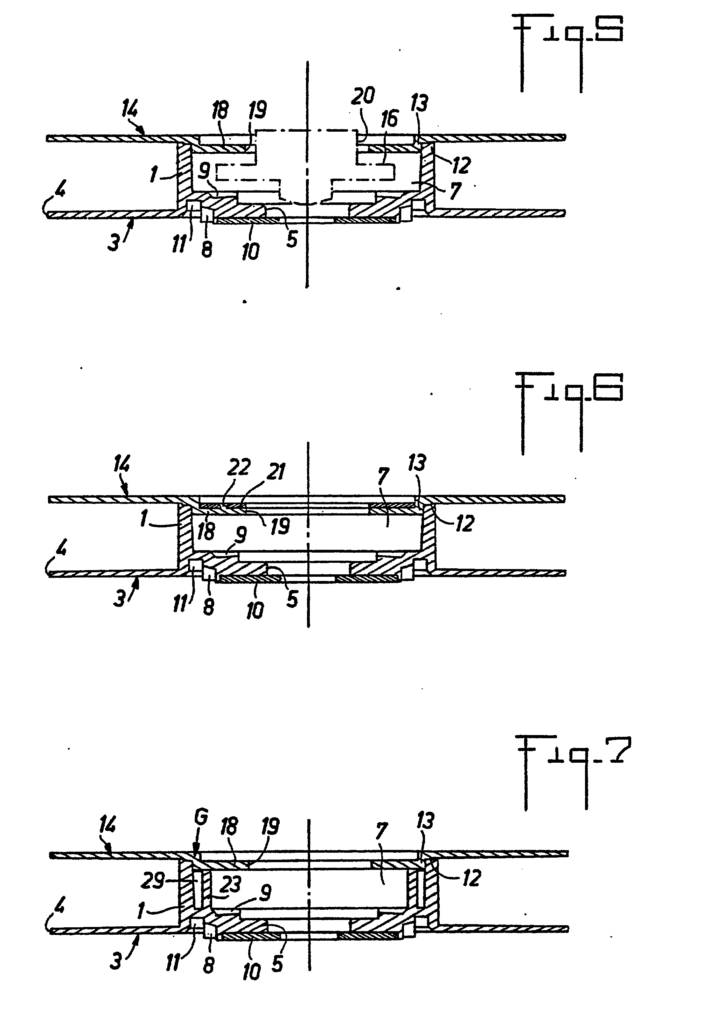

Le chant libre 12 du moyeu 1 est centré dans un rebord 13 d'un deuxième flasque 14 en matière plastique non armée, telle que du polycarbonate, et ce chant 12 est fixé en bout sur ce deuxième flasque par soudage ultrasonique en 15 (figure 2). Un frein 16 est susceptible d'être introduit dans la cavité 7 à travers un passage 17 délimité par le rebord 13 du deuxième flasque. Ce frein est repoussé par un ressort prenant appui sur le boîtier pour coopérer avec la piste dentée d'immobilisation 9 et il peut être neutralisé par écartement axial sous l'action du poussoir 6.

Le stockage ou l'utilisation des signaux enregistrés sur la bande magnétique 2 requiert:
- un moyeu d'enroulement 1 géométriquement parfait et une résistance à la compression la plus élevée possible,
- des flasques 3,14 géométriquement stables afin de ne pas détériorer, par leur déformation, la bande magnétique 2 notamment par frottement.

Or, les contraintes exigées pour l'utilisation fonctionnelle de la bobine considérée aggravent les difficultés de production de celle-ci:
- par la présence de la rondelle ou insert métallique 10 surmoulé qui s'oppose au retrait relativement important de la matière employée, bien que la charge en fibres de verre de celle-ci restreigne ce retrait,
- par le fait que l'introduction du frein 16 s'effectue après l'assemblage de la bobine et nécessite l'aménagement d'un passage 17 dans le flasque rapporté 14.

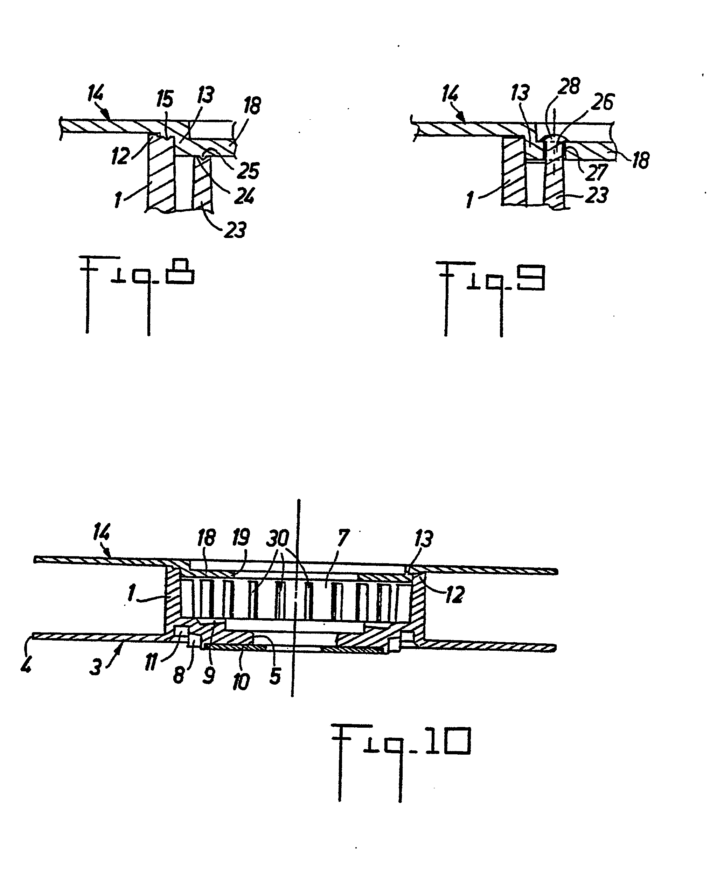

L'inconvénient majeur de cette bobine connue est illustré par la figure 3 et résulte du mauvais soutien de la galette de bande 2 dont les spires provoquent une contraction radiale importante car la bande est enroulée avec une tension élevée.

Lors de l'enroulement et du déroulement à grande vitesse de la bande et des freinages intensifs, brusques et répétés, le moyeu 1 se déforme en cône et il en est de même pour la galette de bande 2. En outre, le flasque rapporté 14 se déforme, en raison notamment de la contraction radiale de l'anneau soudé 15 relativement étroit, et vient toucher la bande.

La figure 4 montre l'effet obtenu par le frottement du bord de ladite bande 2 contre le flasque 14: cette bande s'use d'un côté, frise et ondule. Dès lors, son utilisation devient impossible.

La présente invention a pour but de remédier à ces inconvénients en perfectionnant cette bobine en matière plastique pour qu'elle ne se déforme plus lors des conditions sévères d'utilisation et qu'ainsi la bande magnétique ne s'use plus et soit utilisable normalement.

Dans ce but et conformément à l'invention, le deuxième flasque comporte un prolongement coronal s'étendant vers le centre et rendant le frein prisonnier de ladite cavité le moyeu ainsi partiellement fermé à ses deux extrémités étant structuré en caisson et rigidifiant la bobine.

Avantageusement, le prolongement coronal du deuxième flasque est renforcé par une rondelle, de préférence métallique, fixée à celui-ci.

De plus, la bobine peut comporter un renforcement interne tant du moyeu que de la fixation de celui-ci sur le deuxième flasque.

Selon un premier mode d'exécution, le renforcement est un manchon tubulaire concentrique au moyeu et également venu de moulage avec le premier flasque, ce manchon et ce premier flasque étant de préférence reliés par des nervures axiales.

Selon un deuxième mode d'exécution, le renforcement est constitué par une pluralité de nervures internes faisant saillie à l'intérieur du moyeu.

Dans un cas comme dans l'autre, les éléments de renforcement (manchon et/ou nervures) sont fixés en bout sur le deuxième flasque pour accroître l'étendue radiale de la zone de fixation, cette fixation pouvant être réalisée par soudage ultrasonique, par collage, par rivetage ou autre.

La réalisation connue précitée est illustrée par le dessin annexé qui représente également, à titre d'exemples non limitatifs, des modes d'exécution de l'objet perfectionné selon l'invention.

Sur ce dessin:

- la figure 1 est une coupe diamétrale d'une bobine connue décrite dans ce qui précède, à laquelle les perfectionnements de l'invention sont appliqués,
- la figure 2 est une vue partielle agrandie montrant le détail désigné sur la figure 1 par la flèche F,
- la figure 3 est une vue analogue à la figure 1 illustrant la déformation de cette bobine connue et de la galette de bande magnétique qu'elle contient,
- la figure 4 est une vue en plan représentant un morceau de bande magnétique détériorée par frottement dans la bobine déformée selon la figure 3,

- les figures 5 à 7 et 10 sont des vues analogues à la figure 1, illustrant plusieurs modes d'exécution des perfectionnements apportés selon l'invention,

- les figures 8 et 9 sont des vues partielles agrandies montrant deux modes de liaison différents du détail désigné sur la figure 7 par la flèche G.

Les mêmes moyens que ceux décrits en se référant à la figure 1 se retrouvent sur les figures 5 à 10 et, dès lors, sont désignés par les mêmes chiffres de référence sur ces figures.

Suivant le mode d'exécution de la figure 5, le rebord annulaire 13 du flasque rapporté 14 est venu de moulage avec un prolongement coronal 18 qui obture partiellement le passage large 17. Ce prolongement 18 s'étend vers le centre et délimite un trou central 19. Celui-ci présente une section moindre que ledit passage, étant donné que la course axiale de neutralisation du frein 16 est maintenant limitée à ce qui est seulement nécessaire pour l'écarter de la piste d'immobilisation 9. Le frein est donc prisonnier de la cavité 7 et doit être monté avant que le flasque 14 soit emboîté et fixé sur le moyeu 1. Seuls l'embout 20 du frein et le ressort du boîtier qui l'entoure traversent le trou 19. Ainsi, la bobine se trouve-t-elle rigidifiée par ce moyeu.

Pour améliorer cette rigidification, le prolongement coronal 18 peut être renforcé, ainsi que cela ressort de la figure 6, par une rondelle 21 de préférence métallique, laquelle s'y trouve fixée par tout moyen approprié, tel que rivetage 22, soudage, collage, surmoulage ou autre.

Cependant, cette rondelle 21 peut être constituée, de même d'ailleurs que la rondelle de renfort 10, par une autre matière à résistance mécanique élevée, telle qu'une matière plastique armée ou non et plus spécialement un polyacétal ; dans ce cas, la rondelle 10 peut être, comme la rondelle 21, fixée par d'autres moyens que le surmoulage.

Suivant d'autres modes d'exécution illustrés par les figures 7 et 10 susceptibles d'être ou non combinés avec celui de la figure 5 ou 6, un renforcement interne 23, 25, 28, 29 du moyeu 1 et de sa liaison avec le flasque rapporté 14 est prévu.

Comme le montre la figure 7, le renforcement est constitué par un manchon tubulaire 23 s'étendant concentriquement au moyeu 1. Le manchon 23 et le moyeu 1 sont venus de moulage avec le flasque 3 et sont tous deux fixés en bout sur le deuxième flasque 14 et son prolongement 18 afin d'écarter les zones annulaires de fixation et de rigidifier ainsi la liaison avec ledit flasque 14.

Selon l'exemple de la figure 8, les chants 12 du moyeu 1 et 24 du manchon 23 sont fixés par soudage ultrasonique respectivement en 15 et 25 sur le flasque 14 et le prolongement 18.

Selon l'exemple de la figure 9 applicable dans le cas où les deux pièces constitutives de la bobine (1 et 23 d'une part, 14 d'autre part) sont en des matières plastiques différentes non soudables entre elles, le chant du manchon 23 présente en saillie des tétons 26 traversant des trous 27 du prolongement 18 et rivés de l'autre côté pour former des têtes de retenue 28.

Il peut être avantageux, ainsi que cela ressort de la figure 7, que le moyeu 1 et le manchon 23 soient réunis entre eux par des nervures axiales 29 venues de moulage avec eux pour améliorer encore la rigidification. Ces nervures peuvent ou non être fixées sur le flasque opposé 14.

Comme le montre la figure 10, le renforcement interne du moyeu 1 peut être exempt de manchon 23 et limité à des nervures 30 faisant saillie librement à l'intérieur dudit moyeu 1. Dans l'exemple représenté, les nervures sont axiales, mais elles peuvent être conformées différemment, en hélice notamment, si le démoulage le permet.

**Revendications**

1. Bobine en matière plastique pour bande magnétique, isolément prisonnière d'un boîtier de cassette, comprenant un moyeu d'enroulement (1) creux de grand diamètre venu de moulage avec un flasque (3) s'étendant de la périphérie jusqu'à un trou central (5), flasque qui présente, à l'extérieur, une couronne dentée (8) d'entraînement en rotation et, à l'intérieur sensiblement en regard de cette couronne, une piste dentée d'immobilisation (9), et qui est muni, du trou central jusqu'en regard de ladite couronne, d'une rondelle de renfort (10), de préférence métallique, le chant libre (12) du moyeu étant en outre centré et fixé sur un deuxième flasque (14) et la cavité interne (7) dudit moyeu contenant un frein neutralisable (16) normalement maintenu en prise avec ladite piste et susceptible d'en être écarté par un poussoir (6) traversant le trou central du premier flasque considéré, la bobine étant caractérisée en ce que le deuxième flasque (14) comporte un prolongement coronal (18) s'étendant vers le centre et rendant le frein (16) prisonnier de ladite cavité (7), le moyeu ainsi partiellement fermé à ses deux extrémités étant structuré en caisson et rigidifiant la bobine.

2. Bobine selon la revendication 1, caractérisée en ce que le prolongement coronal (18) du deuxième flasque (14) est renforcé par une rondelle (21), de préférence métallique, fixée à celui-ci.

3. Bobine selon la revendication 1 ou 2, caractérisée en ce qu'elle comporte un renforcement interne tant du moyeu que de la fixation de celui-ci sur le deuxième flasque.

4. Bobine selon la revendication 3, caractérisée en ce que le renforcement est un manchon tubulaire (23) concentrique au moyeu (1) et également venu de moulage avec le premier flasque (3), ce manchon ce premier flasque étant de préférence reliés par des nervures axiales (29).

5. Bobine selon la revendication 3, caractérisée en ce que le renforcement est constitué par une pluralité de nervures internes (30) faisant saillie à l'intérieur du moyeu (1).

6. Bobine selon la revendication 4 ou 5, caractérisée en ce que les éléments de renforcement (manchon (23) et/ou nervure (29, 30) sont fixés en bout (25, 28) sur le deuxième flasque (14) pour accroître l'étendue radiale de la zone de fixation, cette fixation pouvant être réalisée par soudage ultrasonique, par collage, par rivetage ou autre.

## Claims

1. In a reel made of plastics material for magnetic tape, individually prisoner of a cassette housing, comprising a hollow winding hub (1) of large diameter integral with a flange (3) extending from the periphery to a central hole (5) which flange presents on the outside a toothed ring (8) for drive in rotation and, on the inside substantially opposite this ring, a toothed track (9) for immobilization, and which is provided, from the central hole up to opposite said ring, with a reinforcing washer (10), preferably made of metal, the free edge (12) of the hub being in addition centred and fixed on a second flange (14) and the inner cavity (7) of said hub containing a neutralizable brake (16) normally held in engagement with said track and capable of being spaced apart therefrom by a push element (6) passing through the central hole of the first flange in question, the reel being characterized in that the second flange (14) comprises a coronal extension (18) extending towards the centre and imprisoning the brake (16) in said cavity (7) of the hub thus partly closed at its two ends being structured as a box and rigidifying the reel.

2. Reel according to claim 1, characterized in that the coronal extension (18) of the second flange (14) is reinforced by a preferably metallic washer (21) fixed thereto.

3. Reel according to claim 1 or 2, characterized in that it comprises an inner reinforcement both of the hub and of the fixation thereof on the second flange.

4. Reel according to claim 3, characterized in that the reinforcement is a tubular sleeve (23) concentric to the hub (1) and also integral with the first flange (3), this sleeve and this first flange preferably being connected by axial ribs (29).

5. Reel according to claim 3, characterized in that the reinforcement is constituted by a plurality of inner ribs (30) projecting inside the hub (1).

6. Reel according to claim 4 or 5, characterized in that the end (25, 28) of the reinforcing elements (sleeve (23) and/or ribs (29, 30) are fixed on the second flange (14) in order to increase the radial extent of the fastening zone, such fastening being able to be effected by ultrasonic welding, gluing, riveting or the like.

## Patentansprüche

1. Spule aus Kunststoffmaterial für Magnetband, einzeln innerhalb eines Kassettengehäuses, mit einer hohlen Wickelnabe (1) von großem Durchmesser, die beim Formen mit einem Flansch (3) versehen wird, der sich am Umfang bis zu einer zentralen Öffnung (5) erstreckt, wobei der Flansch außen einen Zahnkranz (8) zur Drehmitnahme und im Inneren im wesentlichen gegenüber dieses Kranzes eine Zahnbahn (9) zur Unbeweglichmachung aufweist, und der von der zentralen Öffnung bis gegenüber dem genannten Kranz mit einer Verstärkungsscheibe (10), vorzugsweise aus Metall, versehen ist, wobei die freie Kante (12) der Nabe weiterhin zentriert und auf einem zweiten Flansch (14) fixiert ist, und der Innenraum (7) der Nabe eine aufhebbare Bremse (16) enthält, welche normalerweise in Eingriff mit der genannten Bahn gehalten ist, und geeignet ist, davon entfernt zu werden durch einen Drücker (6), der die zentrale Öffnung des erstbetrachteten Flansches durchquert, wobei die Spule dadurch gekennzeichnet ist, daß der zweite Flansch (14) eine kranzförmige Verlängerung (18) aufweist, die sich zum Zentrum erstreckt, und die Bremse (16) in dem Hohlraum (7) einschließt, wobei die so teilweise geschlossene Nabe an ihren beiden Enden als Kassette strukturiert ist und die Spule versteift.

2. Spule nach Anspruch 1, dadurch gekennzeichnet, daß die kranzförmige Verlängerung (18) des zweiten Flansches (14) durch eine Scheibe (21), vorzugsweise aus Metall, verstärkt ist, die an diesem befestigt ist.

3. Spule nach Anspruch 1 oder 2, dadurch gekennzeichnet, daß sie eine innere Verstärkung sowohl der Nabe als auch der Befestigung von dieser an dem zweiten Flansch aufweist.

4. Spule nach Anspruch 3, dadurch gekennzeichnet, daß die Verstärkung eine rohrförmige Muffe (23) konzentrisch zur Nabe (1) ist und ebenfalls mit dem ersten Flansch (3) geformt ist, wobei diese Muffe und dieser erste Flansch vorzugsweise durch Axialkerben (29) verbunden sind.

5. Spule nach Anspruch 3, dadurch gekennzeichnet, daß die Verstärkung aus einer Mehrzahl von inneren Kerben (30) gebildet ist, die in das Innere der Nabe (1) vorspringen.

6. Spule nach Anspruch 4 oder 5, dadurch gekennzeichnet, daß die Verstärkungselemente (Muffe (23) und/oder Kerben (29, 30)) am Ende (25, 28) an dem zweiten Flansch (14) befestigt sind, um die radiale Erstreckung der Befestigungszone zu vergrößern, wobei diese Befestigung durch Ultraschallschweißen, durch Kleben, durch Nieten usw. verwirklicht werden kann.

Fig.2

Fig.1

Fig.3

Fig.4

Fig.5

Fig.6

Fig.7

Fig.8

Fig.9

Fig.10